# NEUE EUROPÄISCHE PATENTSCHRIFT

(11) **EP 1 852 231 B2**
(45) Veröffentlichungstag und Bekanntmachung des Hinweises auf die Entscheidung über den Einspruch: **03.05.2017**
(45) Hinweis auf die Patenterteilung: 02.10.2013
(21) Anmeldenummer: 07008498.3
(22) Anmeldetag: 26.04.2007
(51) Int. Cl.: C08L 97/02, B27N 1/00

(54) **Verwendung bestimmter Additive zur Verminderung der Freisetzung von flüchtigen organischen Verbindungen aus Holzwerkstoffen und Holzzerkleinerungsprodukten von Lignocellulosen**
Use of certain additives to inhibit the release of volatile organic compounds from wooden materials and wood chipping products made of ligno-cellulose
Utilisation d'additifs définis pour éviter la libération de composés organiques volatiles en matériaux dérivés du bois et produits de concassage du bois en lignocellulose

(30) Priorität: 02.05.2006 DE 102006020612
(43) Veröffentlichungstag der Anmeldung: 07.11.2007
(73) Patentinhaber: SWISS KRONO Tec AG, 6004 Luzern (CH)
(72) Erfinder:
(74) Vertreter: Kröncke, Rolf

(56) Entgegenhaltungen:
- WO-A-00/07786
- WO-A-95/23055
- WO-A-03/040236
- WO-A1-00/07786
- WO-A1-00/25997
- WO-A1-95/23055
- WO-A1-03/040236
- WO-A2-03/035778
- DE-A1- 3 825 320
- DE-A1- 10 154 141
- DE-A1- 10 354 394
- DE-T2- 69 603 548
- FR-A- 2 438 669
- FR-A1- 2 438 669
- JP-A- H07 052 112
- JP-A- 2001 254 064
- RU-C2- 2 213 753
- US-A- 2 378 436
- US-A- 2 471 454
- US-A- 2 471 455
- US-A- 5 223 587
- US-A- 5 223 587
- US-A- 5 520 777
- DATABASE WPI Week 200457 Derwent Publications Ltd., London, GB; AN 2004-590126 XP002456604 & RU 2 213 753 C2 (UNIV BRATSK TECH) 10. Oktober 2003 (2003-10-10) & DATABASE CA CHEMICAL ABSTRACTS SERVICE, COLUMBUS, OHIO, US; gefunden im STN Database accession no. 140:358487
- DATABASE WPI Week 200216 Derwent Publications Ltd., London, GB; AN 2002-117272 XP002456605 & JP 2001 254064 A (SUMITOMO BAKELITE CO LTD) 18. September 2001 (2001-09-18)
- DATABASE WPI Week 199517 Derwent Publications Ltd., London, GB; AN 1995-127739 XP002456606 & JP 07 052112 A (DANTANI SANGYO KK) 28. Februar 1995 (1995-02-28)
- NEUMÜLLER O.A. DR.: 'Römpps Chemie-Lexikon', Bd. 8-9, 1981, FRANCKH'SCHE VERLAGSHANDLUNG, W. KELLER & CO., STUTTGART Seiten 1368 - 1369
- BECKER H.G.O. ET AL: 'Organikum', Bd. 19, 1993, DEUTSCHER VERLAG DER WISSENSCHAFTEN, LEIPZIG - BERLIN - HEIDELBERG Seiten 334-341 - 343
- Woxikon, Synonyme / Synonyme für: ausbilden
- WAGNER-JAUREGG T.: 'Über addierende Heteroplymerisation' BERICHTE DER DEUTSCHEN CHEMISCHEN GESELLSCHAFT 1963, Seiten 3213 - 3224
- Römpp Online-Lexikon, Stichwort: Polyarylate
- Römpp Online-Lexikon, Stichwort: Copolymere
- ANDRÉS G.O. ET AL: 'Kinetic and Theoretical Studies on the Mechanism of Intramolecular Catalysis in Phenyl Ester Hydrolysis' J. ORG. CHEM. Bd. 71, 2006, Seiten 7650 - 7656
- ANDRÉS G.O. ET AL: 'Hydrolysis of aryl hydrogen maleate esters mediated by cyclodextrins - Effect onthe intramolecular catalysis¹' CAN. J. CHEM. Bd. 83, 2005, Seiten 1281 - 1286
- VDI-Richtlinien, VDI 2100, Blatt 4, "Messen gasförmiger Verbindungen in der Aussenluft"
- CLAYDEN J. ET AL: 'Organic Chemistry', 2001, OXFORD UNIVERSITY PRESS, OXFORD Seiten 518-519 - 905-910
- DEPPE H.-J. ET AL: 'Taschenbuch der Spanplattentechnik', Bd. 4, 2000, DRW-VERLAG, LEINFELDEN-ECHTERDINGEN Seiten 359 - 387
- DUNKY M. ET AL: 'Holzwerkstoffe und Leime', 2002, SPRINGER-VERLAG, BERLIN HEIDELBERG Seiten 91 - 157
- WILKE O. ET AL: 'Bestimmung der VOC-Emissionen aus Grobspanplatten (OSB-Platten) und ihre Bewertung nach dem AgBB-Schema' UMID Januar 2013, Seiten 5 - 11
- WAHRIG G.: 'Deutsches Wörterbuch', 1966, MOSAIK VERLAG Seiten 2178 - 2183
- WAHRIG G.: 'Deutsches Wörterbuch', 1966, MOSAIK VERLAG Seiten 1488 - 1493
- Duden online, Stichwort: zwischen
- T. Salthammer, R. Marutzhi, "Bauen und Leben mit Holz", Informationsdienst Holz spezial, DHWR Deutscher Holzwirtschaftsrat e.V.
- GESTIS-Stoffdatenbank, Stichwort: Acetaldehyd
- Römpp Online-Lexikon, Stichwort: Acrylsäureester
- GisChem, Stichwort: Salpetersäure, ab 20% bis 65%
- GESTIS-Stoffdatenbank, Stichwort: Salpetersäure
- COTTON F.A. ET AL: 'Anorganische Chemie', 1967, VERLAG CHEMIE, GMBH, WEINHEIM Seite 512
- NEUMÜLLER O.-A. DR.: 'Römpps Chemie-Lexikon', Bd. 8, 1988, FRANCKH'SCHE VERLAGSHANDLUNG, STUTTGART Seiten 4164 - 4167
- GESTIS-Stoffdatenbank, Stichwort: Maleinsäure
- SCHORMÜLLER J.: 'Die Bestandteile der Lebensmittel', 1965, SPRINGER-VERLAG, BERLIN Seite 773
- BRIEGER R. ET AL: 'Spezielle Analyse, Anorganische Stoffe - Organische Stoffe', Bd. 1, 1932, SPRINGER-VERLAG, BERLIN Seite 423
- Römpp Online-Lexikon, Stichwort: Maleinsäureanhydrid
- DEPPE H.-J. ET AL: 'Taschenbuch der Spanplattentechnik', Bd. 4, 2000, DRW-VERLAG, LEINFELDEN Seiten 418 - 419
- DUNKY M. ET AL: 'Holzwerkstoffe und Leime - Technologie und Einflussfaktoren', 2002, SPRINGER-VERLAG, BERLIN - NEW YORK Seiten 603 - 604
- DIELS O. ET AL: 'Zur Kenntnis der Dien-Synthesen, XXIX. Mitteil.: x-Terpinen' BERICHTE DER DEUTSCHEN CHEMISCHEN GESELLSCHAFT Bd. 71, Nr. 6, 1938, Seiten 1163 - 1172
- HULTZSCH K.: 'Über die Anlagerung von Maleinsäure-anhydrid an Terpenkohlenwasserstoffe' BERICHTE DER DEUTSCHEN CHEMISCHEN GESELLSCHAFT Nr. 6, 1939, Seiten 1173 - 1187
- ARNOLD R.T. ET AL: 'Reaction of ß-Pinene with Dienophiles' J. AM. CHEM. SOC. Bd. 79, 20 Januar 1957, Seiten 419 - 422
- TOPCHIEV A.V. ET AL: 'Boron Fluoride and Its Compounds as Catalysts in Organic Chemistry', PERGAMON PRESS Seite 158
- KNOP A. DR. ET AL: 'Phenolic Resins - Chemistry, Applications and Performance - Future Directions', 1985, SPRINGER-VERLAG, BERLIN HEIDELBERG - NEW YORK - TOKYO Seiten 296 - 298

## Beschreibung

Die Erfindung wird in den Ansprüchen definiert und im Folgenden weiter erläutert.

Lignocellulosen oder lignocellulosehaltige Materialien, wie Holz und Holzzerkleinerungsprodukte und daraus hergestellte Holzwerkstoffe, enthalten u. a. flüchtige organische Verbindungen (VOC) und sehr flüchtige organische Verbindungen. Als flüchtige organische Verbindungen (VOC) werden alle flüchtigen organischen Stoffe subsumiert, deren Retentionszeit im Gaschromatogramm zwischen C6 (Hexan) und C16 (Hexadecan) liegt. Zu den leicht flüchtigen organischen Verbindungen gehören unter anderem Ameisensäure und Formaldehyd.

Flüchtige organische Verbindungen und sehr flüchtige organische Verbindungen kommen in Abhängigkeit von der Art und dem Zustand der Lignocellulosen, wie der Holzart, der Lagerungsdauer, den Lagerungsbedingungen des Holzes bzw. der Zerkleinerungsprodukte der Lignocellulosen, in unterschiedlichen chemischen Zusammensetzungen und Mengen vor. Die VOCs entstammen dabei im Wesentlichen den Extraktstoffen der Lignocellulosen, z.B. des Holzes oder ihren Umwandlungsprodukten. Prominente Vertreter hiervon sind Stoffe wie alpha-Pinen, beta-Pinen, delta-3-Caren. Dabei finden sich diese Bestandteile vor allem im Holz der Nadelbäume wieder. Umwandlungsprodukte, die in den Lignocellulosen, wie im Holz und den Zerkleinerungsprodukten der Lignocellulosen während der Lagerung und der Bearbeitung auftreten, sind z. B. Pentanal und Hexanal. Vor allem Nadelhölzer, aus denen vorwiegend mitteldichte Faserplatten (MDF) oder OSB-Platten hergestellt werden, enthalten große Mengen an Harz und Fetten, die zur Bildung von flüchtigen organischen Terpenverbindungen und Aldehyden führen. Teilweise entstehen diese Stoffe auch durch Abbau der Hauptbestandteile des Holzes, wie Lignin, Zellulose und Hemizellulose. VOCs können auch bei der Verwendung bestimmter Klebstoffe für die Herstellung der Holzwerkstoffe entstehen.

Übliche Klebstoffe, wie sie derzeit in der Herstellung von Holzwerkstoffen, wie OSB- Platten, mitteldichte Faserplatten usw. verwendet werden, schließen Aminoplastharze, wie Harnstoff- Formaldehydharz (UF-Harz), Melamin- Harnstoff- Phenol- Formaldehydharz (MUPF- Harz) oder Melamin- Harnstoff- Formaldehydharz (MUF- Harz) ein. Weitere Klebstoffe, wie sie typischerweise eingesetzt werden, umfassen Klebstoffe auf Basis von Diisocyanaten (PMDI), wie Klebstoffe auf Polyurethanbasis, Phenol- Formaldehydharz (PF- Harz), und/oder Tannin- Formaldehydharz (TF- Harz) oder Gemische hiervon. Im Faserplattenbereich finden z. B. hauptsächlich Aminoplastharze Verwendung. Die VOCs werden aus den Holzwerkstoffen bzw. den Zerkleinerungsprodukten von Lignocellulosen sowohl während der Herstellung der Holzwerkstoffe als auch nach deren Herstellung oder bei ihrer Anwendung freigesetzt. Auf die Zusammensetzung der flüchtigen Bestandteile haben neben der Holzart selbst auch die Aufschlussart und die Aufschlussbedingungen aber auch die verwendeten Klebstoffe und weiteren Zusatzstoffe Einfluss.

Neben möglichen Wirkungen auf die Gesundheit können die VOCs durch die Reaktion mit Sauerstoff (O₂) oder anderen Oxidationsmitteln insbesondere während der Lagerung und in der Verwendung zu einem stechenden Geruch beitragen, der bei bestimmten Holzwerkstoffen aus Nadelholz, wie OSB-Platten oder mitteldichte Faserplatten unangenehm und prägnant sein kann.

Bei der Faserplattenherstellung kann es z. B. bei der thermohydrolytischen Behandlung der lignocellulosehaltigen Materialien zu einem chemischen Teilabbau des Holzes kommen. Die dabei entstehenden, leicht flüchtigen Verbindungen, wie Aldehyde und Säuren, emittieren dann während des späteren Herstellungsverfahrens oder bei späterer Nutzung der hergestellten Holzwerkstoffe. Sie können weiterhin einen negativen Einfluss auf die Klebewirkung des Klebstoffes haben und somit die Eigenschaften der hergestellten Holzwerkstoffe negativ beeinflussen.

Das Dokument RU 2 213 753 C2 offenbart eine Klebstoffzusammensetzung zur Herstellung einer Holzfaserplatte mit einem reduzierten freien Formaldehyd-Gehalt.

Aus den oben genannten Gründen war es die Aufgabe der vorliegenden Erfindung, eine Möglichkeit zu schaffen, den Anteil an flüchtigen organischen Verbindungen (VOC) in den Zerkleinerungsprodukten der Lignocellulosen und den daraus hergestellten Holzwerkstoffen zu reduzieren.

Die Aufgabe wird dadurch gelöst, dass die Zerkleinerungsprodukte der Lignocellulosen, wie Holzzerkleinerungsprodukte, mit geeigneten Additiven versetzt werden, die im Laufe des Herstellungsverfahrens durch eine Wärmebehandlung, bei dem Schritt des Heißverpressens der Zerkleinerungsprodukte, mit den VOCs umgesetzt werden. Dabei entstehen Verbindungen, die so hochmolekular sind, dass sie nicht mehr flüchtig sind und somit nicht mehr zu den VOC-Emissionen beitragen.

Genauer wurde festgestellt, dass durch Umsetzung der VOCs mit Verbindungen der Komponente A, wie Phenol oder homologe Phenole oder Resorcin, Phenol- Formaldehyd- Vorkondensate (Phenol- Formaldehyd- Klebstoffe), oder Resorcin- Formaldehyd- Klebestoffe in Anwesenheit einer Komponente B, nämlich einer Mischung einer starken Säure und eines Friedel- Crafts-Katalysators, durch Addition der Komponente A an die VOCs diese VOC zu höher molekularen Verbindungen umgesetzt werden, die nicht mehr flüchtig sind. Bevorzugt ist die starke Säure, eine starke anorganische Säure, wie Schwefelsäure, Salpetersäure oder Salzsäure. Der Friedel- Crafts- Katalysator als eine Möglichkeit für die Komponente B ist bevorzugt Aluminiumtrichlorid oder Bortrifluorid. Es wird angenommen, dass die Terpene aus der Holzmatrix mit der Kompenente A bei Anwesenheit des Friedel- Crafts- Katalysators reagieren und dabei z. B. Terpenphenolether oder Terpenphenole ausbilden.

Erfindungsgemäß erfolgt eine Zumischung der Komponenten A und B vor dem Heißverpressen der lignosehaltigen Materialien zur Ausbildung des Holzwerkstoffs. Die Umsetzung (Reaktion) der flüchtigen organischen Stoffe mit der Komponente A katalysiert durch die Komponente B erfolgt bei den dafür notwendigen hohen Temperaturen z.B. direkt in der Heißpresse. Wenn die Komponente A auch als Klebstoff eingesetzt wird, ist ein zumischen der mindestens einen Verbindung der Komponente B als Additiv ausreichend.

Es können erfindungsgemäß auch mehrere Verbindungen der Komponente A mit mindestens einer Verbindung der Komponente B verwendet werden. Die vorliegende Erfindung umfasst daher auch Verwendungen bei denen mindestens ein, zwei oder mehr Verbindungen der Komponente A mit mindestens ein, zwei oder mehr Verbindungen der Komponente B verwendet werden.

In einer weiteren erfindungsgemäßen Ausführungsform werden die Lignocellulosen mit einer Komponente C erfindungsgemäß für einen Holzwerkstoff verwendet. Die Komponente C ist dabei eine Verbindung ausgewählt aus einer Gruppe, beinhaltend Maleinsäureanhydrid, Fumarsäure, Acrylsäure, oder Homologe der Acrylsäure, nämlich Methacrylsäure. Diese Verbindungen können einzeln oder als Mischungen wenigstens zwei dieser Verbindungen als Komponente C verwendet werden.

Auch diese Verbindungen der Komponente C sind in der Lage, z. B. mit Terpenen zu reagieren. Liegen Terpene (z. B. Dipenten, Terpinolen) mit konjugierten Doppelbindungen vor, so ist eine klassische Diels-Alder-Reaktion (Dien/Dienophil) mit Maleinsäure oder Fumarsäure möglich. Bei den wichtigsten Terpenen aus Holzwerkstoffen (Pinen, Limonen, Caren) liegen nur isolierte Doppelbindungen vor. Es wird angenommen, dass es hierbei zu einer anormalen Diensynthese nach Diels-Alder, z. B. bei Maleinsäureanhydrid oder Fumarsäure, oder einer addierenden Heteropolymerisation im Fall der Acrylate, kommt.

Die Komponente C wird dabei so zu den Lignocellulosen zugefügt, dass die Reaktion zwischen den flüchtigen organischen Verbindungen und der Komponente C bei den dafür notwendigen hohen Temperaturen z.B. während des Heißverpressens geschieht. Die dabei entstehenden Verbindungen sind hochmolekular und können daher nicht mehr zu den VOC-Emissionen beitragen.

Die Additive können dabei sowohl flüssig, z. B. als wässrige Dispersion, als auch in festem Zustand, z. B. als Partikel, dem Prozess zugegeben werden.

In einer Ausführungsform werden die Komponenten A und B gemeinsam mit mindestens einer Komponente C appliziert.

Erfindungsgemäß werden die Additive dabei in einem Anteil 0,01 % und 1% Feststoff bezogen auf atro Holz hinzugefügt. Natürlich können den Lignocellulosen auch andere übliche Stoffe hinzugefügt werden. Zum Beispiel werden konventionelle Klebstoffe in einem Bereich von 3% bis 12% Feststoff bezogen auf atro Holz hinzugefügt.

Die Komponente A bzw. die Komponente C wirken dabei als eine Art Fängermolekül für die flüchtigen organischen Verbindungen und bilden nach Umsetzung mit den flüchtigen organischen Verbindungen Verbindungen mit einem höheren Molekulargewicht aus, die nicht mehr oder nur sehr gering aus den Lignocellulosen, wie den Holzwerkstoffen, austreten. Diese durch Umsetzung der VOC mit der Komponente A bzw. C entstandenen Verbindungen sind weiter in ihren toxikologischen Wirkungen auf Lebewesen eingeschränkt.

Das Vermischen mit dem Additiv, das bevorzugt zusammen mit dem Vermischen mit dem Klebstoff erfolgt, kann vor oder nach Lagerung der Lignocellulosen oder der Zerkleinerungsprodukte hiervon erfolgen.

Bei den Lignocellulosen, wie den Holz, oder Zerkleinerungsprodukten hiervon, kann es sich dabei sowohl um Nadelhölzer als auch um Laubhölzer handeln. Auch Mischungen dieser beiden Holzarten sind möglich. Bevorzugt stammen die Holzspäne, Strands oder Holzfasern von Nadelhölzern.

Die mit dem Herstellungsverfahren herstellbaren Holzwerkstoffe können gemäß bekannten Verfahren hergestellt werden.

Zusätzlich können auch andere, dem Fachmann bekannte Verfahren zur Verminderung der Emission von flüchtigen organischen Verbindungen oder leicht flüssigen organischen Verbindungen angewendet werden.

Während des Herstellungsverfahrens, z. B. im Zuge der thermolytischen Behandlung von Fasern im Refiner entstehen durch teilweise Zersetzung der Lignocellulosen, insbesondere der Hemizellulose des Holzes, flüchtige Verbindungen. In einer weiteren vorteilhaften Ausführungsform betrifft die vorliegende Erfindung daher eine Verwendung, bei dem die Komponente C und/oder die Komponenten A und B nach dem Refiner den Fasern beigemischt werden. Dies kann z. B. zusammen mit Einblasen des Klebstoffes geschehen. Die Zugabe der Komponenten A/B und/oder C kann auch vor dem Refiner-Schritt erfolgen.

Es wurde nun überraschend gefunden, dass die Zugabe der Komponenten A/B und/oder C die Emission von flüchtigen organischen Verbindungen aus den lignozellulosehaltigen Materialien herabsetzen, auch nach Herstellung des Holzwerkstoffes. Diese Reduktion der Emission von flüchtigen organischen Verbindungen hält nach Herstellung der Holzwerkstoffe und bei der Verwendung der Holzwerkstoffe an.

Bei den Holzwerkstoffen kann es sich bevorzugt um Spanplatten aus Holzspänen, OSB-Strands aus Holzstrands und Holzfaserplatten, insbesondere MDF-Platten, aus Holzfasern handeln.

Unter Lignocellulosen werden lignocellulosehaltige Materialien, wie Holz verstanden. Daraus erhaltene Zerkleinerungsprodukte von Lignocellulosen umfassen insbesondere Holzstrands, Holzspäne oder Holzfasern.

Die Komponenten A/B und/oder C können dabei gemäß bekannten Verfahren zu den Lignocellulosen oder deren Zerkleinerungsprodukten appliziert werden. Besonders geeignet ist die Applikatiion der Komponenten als flüssige Lösung und/oder Dispersion. Dieses kann z.B. über konventionelle Mischer mittels Düsen und/oder Zentrifugalzerstäubern erfolgen, die analog zur Applikation des Klebstoffs eingesetzt werden. Für die MDF-Herstellung ist die Applikation über Düsen im Blasrohr (Blowline) oder Trockenmischer geeignet.

Nach Applikation hat eine Behandlung zu erfolgen, derart, dass dem System ausreichend Energie, z.B. durch Wärme, zugeführt wird, dass eine Umsetzung der VOC mit den Additiven der Komponenten A oder C gegebenenfalls in Anwesenheit der Komponente B erfolgt. Diese Behandlung kann z.B. das Heißverpressen der Zerkleinerungsprodukte sein.

### Kurze Beschreibung der Abbildungen:

Abbildung 1 zeigt ein Chromatogramm der gaschromatographischen Bestimmung organischer Verbindungen in der Kontrolle aus Beispiel 1. Dargestellt sind die Ergebnisse für die drei häufigsten Terpene, nämlich alpha-Pinen, beta-Pinen und delta-3-Caren.

Abbildung 2 zeigt ein Chromatogramm der gaschromatographischen Bestimmung organischer Verbindungen in der mit Maleinsäureanhydrid behandelten Probe aus Beispiel 1. Wie in der Abbildung 1 sind die Ergebnisse für die drei häufigsten Terpene, nämlich alpha- Pinen, beta- Pinen und delta- 3- Caren, dargestellt.

Die folgenden Beispiele sollen die Erfindung weiter beschreiben ohne sie einzuschränken.

### Beispiel 1

In einem ersten Versuch wurden 1g OSB-Strandmaterial (Kernholz reich an Terpen, getrocknet, ungeleimt) in einem Headspace-Vial eingewogen. Eine Blindprobe wurde ebenfalls hergestellt. Die Probe wurde mit 1 % Maleinsäureanhydrid (MSA) (1 % MSA auf atro Holz), die als wässrige Lösung appliziert wurde, behandelt, danach wurde die Probe 3 Tage unter Normalbedingungen (20°C, 65% rel. Feuchte) getrocknet. Die Blindprobe wurde ebenfalls offen stehengelassen. Beide Proben wurden im Anschluss verschlossen und für 15 Minuten bei 100°C erhitzt, um ein Umsetzen des MSA mit den flüchtigen organischen Verbindungen und insbesondere den Terpenen zu erlauben.

Anschließend wurden die Proben mittels Gaschromatographie mit Hilfe der statischen Headspace analysiert gemäß Richtlinie VDI 2100 Blatt 4: Messen gasförmiger Verbindungen in der Außen- und Innenraumluft - Gaschromatographische Bestimmung organischer Verbindungen - Kalibrierverfahren als Maßnahme zur Qualitätssicherung.

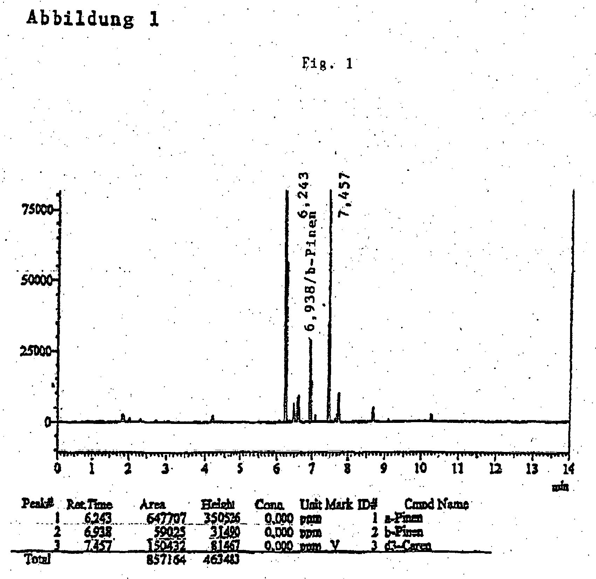

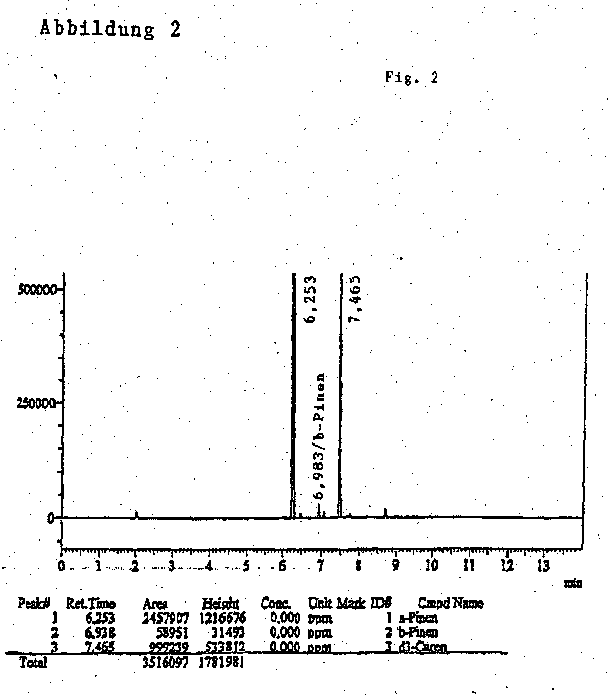

In der Abbildung 1 ist ein Chromatogramm der Probe ohne Behandlung mit Maleinsäureanhydrid dargestellt, Abbildung 2 zeigt die Probe, die mit 1% Maleinsäureanhydrid - als wässrige Lösung appliziert - behandelt wurde. Die Untersuchung wurde dabei auf die drei häufigsten Terpene in dem lignocellulosehaltigen Material konzentriert, nämlich auf alpha-Pinen, beta-Pinen und delta-3-Caren. Wie sich aus den Flächen, die proportional zur Konzentration sind, deutlich ergibt, wird bei alpha-Pinen eine Reduktion der Emission von 73% erreicht und bei delta-3-Caren von 85%. Die Konzentration von beta-Pinen verbleibt unverändert.

Wie in den Abbildungen 1 und 2 zu erkennen ist, konnte eine deutliche Reduktion der Emission der Terpene alpha-Pinen und delta-3-Caren durch Behandlung mit 1% Maleinsäureanhydrid erzielt werden.

### Beispiel 2 (nicht gemäß der Erfindung)

In analoger Weise zu dem Verfahren gemäß Beispiel 1 wurden 1g OSB-Strandmaterial (Kernholz, reich an Terpen, getrocknet, ungeleimt) in einem Headspace-Vial eingewogen. Die Probe wurde mit 1% Phenol-Formaldehyd-Klebstoff und 1% Schwefelsäure (bezogen auf atro Holz) vermischt und anschließend verschlossen und für 15 Minuten bei 100°C erhitzt, um ein Umsetzen des PF-Klebstoffs mit den flüchtigen organischen Verbindungen zu erlauben. Parallel dazu wurde eine Kontrollprobe in gleicher Weise behandelt nur das keine Schwefelsäure zugesetzt wurde.

Die Analyse der Proben erfolgte wie unter Beispiel 1 beschrieben. Auch hier kann eine Reduktion der Emission der Terpene beobachtet werden.

## Patentansprüche

1. Verwendung eines Additivs zur Verminderung der Abgabe von flüchtigen organischen Verbindungen aus Holzwerkstoffen, wobei die Holzwerkstoffe aus Zerkleinerungsprodukten von Lignocellulosen gebildet sind und die Zerkleinerungsprodukte von Lignocellulosen mit Klebstoff vermischt werden und die Mischung aus Zerkleinerungsprodukten von Lignocellulosen und der Klebstoff anschließend heiß verpresst wird zur Ausbildung von Holzwerkstoffen, wobei das Additiv den Zerkleinerungsprodukten vor dem Heißverpressen zugesetzt wird, wobei das Additiv dabei mindestens ein Additiv aus mindestens einer Kombination der Komponenten A und B und/oder mindestens einer Komponente C ist, wobei die Komponente A Phenol oder homologe Phenole, Resorcin, Phenol-Formaldehyd-Vorkondensate oder Resorcin-Formaldehyd-Mischungen oder Mischungen dieser Verbindungen ist, die Komponente B eine starke Säure, insbesondere Schwefelsäure, Salpetersäure oder Salzsäure und ein Friedel-Crafts-Katalysator, bevorzugt Aluminiumtrichlorid oder Bortrifluorid ist, die Komponente C Maleinsäureanhydrid, Fumarsäure, Acrylsäure, Homologe der Acrylsäure oder Mischungen hiervon ist und wobei die Menge des Additivs zwischen 0,01 % und 1 % Feststoff bezogen auf atro Lignocellulose beträgt.

2. Verwendung gemäß Anspruch 1, **dadurch gekennzeichnet, dass** die Holzwerkstoffe Spanplatten aus Holzspänen, OSB-Platten aus Holzstrands oder Holzfaserplatten, insbesondere mitteldichte Faserplatten aus Holzfasern sind.

3. Verwendung gemäß einem der Ansprüche 1 oder 2, **dadurch gekennzeichnet, dass** das Additiv zusammen mit dem Klebstoff den Zerkleinerungsprodukten der Lignocellulosen zugemischt wird.

4. Verwendung gemäß einem der Ansprüche 1 bis 3, **dadurch gekennzeichnet, dass** die Lignocellulosen, insbesondere die Zerkleinerungsprodukte der Lignocellulosen vor der Behandlung gelagert werden.

5. Verwendung gemäß einem der Ansprüche 1 bis 4, **dadurch gekennzeichnet, dass** der verwendete Klebstoff ein Phenol-Formaldehydharz (PF-Harz), ein Klebstoff auf Basis von Isocyanaten (PMDI), ein Harnstoff-Formaldehydharz (UF-Harz), ein Melamin-Harnstoff-Formaldehydharz (MUF-Harz), ein Melamin-Harnstoff-Phenol-Formaldehydharz (MUPF-Harz) und/oder ein Tannin-Formaldehydharz (TF-Harz) ist.

## Claims

1. Use of an additive for reducing the emission of volatile organic compounds from woodbase materials, the woodbase materials being formed from comminution products of lignocelluloses and the comminution products of lignocelluloses being mixed with adhesive, and the mixture of comminution products of lignocelluloses and the adhesive subsequently being hot-pressed to form woodbase materials, the additive being added to the comminution products before the hot-pressing operation, this additive being at least one additive composed of at least one combination of components A and B and/or at least one of component C, component A being phenol or phenol homologues, resorcinol, phenol-formaldehyde precondensates, or resorcinol-formaldehyde mixtures or mixtures of these compounds, component B being a mixture of a strong acid, especially sulphuric acid, nitric acid or hydrochloric acid, and of a Friedel-Crafts catalyst, preferably aluminium trichloride or boron trifluoride, component C being maleic anhydride, fumaric acid, acrylic acid, homologues of acrylic acid or mixtures thereof, and the amount of the additive being between 0.01% and 1% solids based on dry weight of lignocelluloses.

2. The use according to Claim 1, **characterized in that** the woodbase materials are particleboards composed of wood turnings, OSB boards made from wood strands, or wood fibreboards, especially medium density fibreboards made from wood fibres.

3. The use according to either of Claims 1 and 2, **characterized in that** the additive is mixed together with the adhesive with the comminution products of lignocelluloses.

4. The use according to any of Claims 1 to 3, **characterized in that** the lignocelluloses, especially the comminution products of lignocelluloses, are stored prior to treatment.

5. The use according to any of Claims 1 to 4, **characterized in that** the adhesive used is a phenol-formaldehyde resin (PF resin), an adhesive based on isocyanates (PMDI), a urea-formaldehyde resin (UF resin), a melamine-urea-formaldehyde resin (MUF resin), a melamine-urea-phenol-formaldehyde resin (MUPF resin) and/or a tannin-formaldehyde resin (TF resin).

## Revendications

1. Utilisation d'un additif pour réduire l'émission de composés organiques volatils de matériaux dérivés du bois, les matériaux dérivés du bois étant formés à partir de produits de concassage de lignocelluloses et les produits de concassage de lignocelluloses étant mélangés avec un adhésif et le mélange des produits de concassage de lignocelluloses et de l'adhésif étant ensuite comprimé à chaud pour la formation de matériaux dérivés du bois, l'additif étant ajouté aux produits de concassage avant la compression à chaud, l'additif étant au moins un additif constitué d'au moins une combinaison des composants A et B et/ou aux moins un de composant C, le composant A étant le phénol ou des phénols homologues, la résorcine, des pré-condensés phénol-formaldéhyde ou des mélanges résorcine-formaldéhyde ou des mélanges de ces composés, le composant B étant un acide fort, notamment l'acide sulfurique, l'acide nitrique ou l'acide chlorhydrique, et un catalyseur de Friedel-Crafts, de préférence le trichlorure d'aluminium ou le trifluorure de bore, le composant C étant l'anhydride de l'acide maléique, l'acide fumarique, l'acide acrylique, des polyacrylates, des homologues de l'acide acrylique ou leurs mélanges, et la quantité de l'additif étant comprise entre 0,01 % et 1 % de solide par rapport à la lignocellulose atro.

2. Utilisation selon la revendication 1, **caractérisée en ce que** les matériaux dérivés du bois sont des panneaux de particules constitués de particules de bois, des panneaux OSB constitués de grandes particules de bois ou des panneaux de fibres de bois, notamment des panneaux de fibres à densité moyenne de fibres de bois.

3. Utilisation selon l'une quelconque des revendications 1 ou 2, **caractérisée en ce que** l'additif est ajouté conjointement avec l'adhésif aux produits de concassage des lignocelluloses.

4. Utilisation selon l'une quelconque des revendications 1 à 3, **caractérisée en ce que** les lignocelluloses, notamment les produits de concassage des lignocelluloses, sont entreposées avant le traitement.

5. Utilisation selon l'une quelconque des revendications 1 à 4, **caractérisée en ce que** l'adhésif utilisé est une résine phénol-formaldéhyde (résine PF), un adhésif à base d'isocyanates (PMDI), une résine urée-formaldéhyde (résine UF), une résine mélamine-urée-formaldéhyde (résine MUF), une résine mélamine-urée-phénol-formaldéhyde (résine MUPF) et/ou une résine tanin-formaldéhyde (résine TF).
